# EUROPÄISCHE PATENTSCHRIFT

(11) **EP 1 730 433 B1**
(45) Veröffentlichungstag und Bekanntmachung des Hinweises auf die Patenterteilung: **05.11.2008**
(21) Anmeldenummer: 05707599.6
(22) Anmeldetag: 24.02.2005
(51) Int. Cl.: F16L 3/00, F16B 37/04, F16B 5/02, F16B 37/08

(54) **VORRICHTUNG ZUM BEFESTIGEN AN EINEM MIT EINEM GEWINDEBOLZEN VERSEHENEN TRÄGERTEIL**
DEVICE TO BE FASTENED TO A SUPPORT WHICH IS PROVIDED WITH A THREADED BOLT
DISPOSITIF A FIXER SUR UNE PIECE DE SUPPORT POURVUE D'UN BOULON FILETE

(30) Priorität: 23.03.2004 DE 102004014593
(43) Veröffentlichungstag der Anmeldung: 13.12.2006
(73) Patentinhaber: A. RAYMOND ET CIE, 38000 Grenoble (FR)
(72) Erfinder: KURTH, Martin, 79576 Weil am Rhein-Ötlingen (DE)
(74) Vertreter: Rüttgers, Joachim
(86) Internationale Anmeldenummer: PCT/EP2005/001909
(87) Internationale Veröffentlichungsnummer: WO 2005/095836

(56) Entgegenhaltungen:
- DE-C1- 19 533 138
- DE-U1- 20 023 083

## Beschreibung

Die Erfindung betrifft eine Vorrichtung zum Befestigen an einem mit einem Gewindebolzen versehenen Trägerteil gemäß dem Oberbegriff des Patentanspruches 1.

Eine derartige Vorrichtung ist aus DE 195 33 138 C1 bekannt. Bei der vorbekannten Vorrichtung sind ein auf einen Gewindeabschnitt des Gewindebolzens aufschraubbares Schraubteil und ein Widerlagerbereich vorhanden, an dem das Schraubteil in einer Endlage anliegt. Das Schraubteil weist eine erste Eingriffsstruktur in Gestalt von sich radial erstreckenden flachen Vorsprüngen auf. Weiterhin ist ein drehbares Teil vorhanden, das über eine zweite Eingriffsstruktur in Gestalt von gegenüber den flachen Vorsprüngen in radialer Richtung überdimensionierten Aufnahmetaschen verfügt, die mit der ersten Eingriffsstruktur in Eingriff ist, wobei das Schraubteil sowie das Teil wenigstens vor Einnahme der Endlage in radialer Richtung zueinander bewegbar sind. Dadurch ist das Schraubteil schwimmend in dem Teil gelagert.

Aus DE 200 23 083 U1 ist eine Rohrschelle mit einem weiblichen Befestigungselement bekannt, dass mehrere bewegbare Segmente aufweist, die auf das Profil eines männlichen Befestigungselementes angreifen. Dadurch ist eine drehfeste Verbindung zwischen dem weiblichen Befestigungselement und dem männlichen Befestigungselement erzielt.

Weitere Vorrichtungen zum Befestigen an einem mit einem Gewindebolzen versehenen Trägerteil sind in der Praxis bekannt und verfügen über ein als Schraubenmutter ausgebildetes Schraubteil, das bis zum Anliegen in einer Endlage an einem Widerlagerbereich auf einen Gewindeabschnitt eines Gewindebolzens aufschraubbar ist. Zwar sind mit den vorbekannten Vorrichtungen beispielsweise mit ihnen verbundene Leitungshalter an Gewindebolzen befestigbar, allerdings weisen sie den Nachteil auf, dass bei einer einzuhaltenden relativen Anordnung zu dem Trägerteil zu Zwecken einer automatisierten Montage Toleranzen in der Positionierung der Gewindebolzen nicht oder nur äußerst eingeschränkt ausgleichbar sind.

Der Erfindung liegt die Aufgabe zugrunde, eine Vorrichtung der eingangs genannten Art anzugeben, mit der bei einer automatisierten Montage auch bei radialen Toleranzen in der Positionierung von Gewindebolzen eine bestimmte festgelegte Anordnung in Bezug auf das Trägerteil einhaltbar ist.

Diese Aufgabe wird bei einer Vorrichtung der eingangs genannten Art erfindungsgemäß mit den kennzeichnenden Merkmalen des Patentanspruches 1 gelöst.

Dadurch, dass das Schraubteil und das Antriebsteil in radialer Richtung zueinander bewegbar sowie drehfest miteinander Eingriff sind und somit das Schraubteil durch das Zusammenwirken der Eingriffsstrukturen bei Drehen des Antriebsteiles durch Eingriff eines Handhabungswerkzeugs mit der Werkzeugansatzstruktur ebenfalls gedreht wird, lassen sich bei einer festgelegten Anordnung in Bezug auf das Trägerteil radiale Toleranzen in der Anordnung der Gewindebolzen ausgleichen.

Weitere zweckmäßige Ausgestaltungen der Erfindung sind Gegenstand der Unteransprüche.

Nachfolgend wird ein bevorzugtes Ausführungsbeispiel der Erfindung unter Bezug auf die Figuren der Zeichnung geschrieben. Es zeigen:
- Fig. 1: in einer perspektivischen Explosionsdarstellung ein Aus- führungsbeispiel der Erfindung, das in einen Kabelhalter in- tegriert ist und ein Schraubteil sowie ein Antriebsteil auf- weist, die in einem Ringkäfig gehalten sind,
- Fig. 2: in einer weiteren perspektivischen Explosionsdarstellung das Ausführungsbeispiel gemäß Fig. 1,
- Fig. 3: in einer gegenüber dem Maßstab von Fig. 1 und Fig. 2 ver- größerten teilgeschnittenen perspektivischen Darstellung das Ausführungsbeispiel gemäß Fig. 1 und Fig. 2 im Be- reich des Schraubteiles und des Antriebsteiles und
- Fig. 4: in einer Schnittansicht das Ausführungsbeispiel gemäß Fig. 1 bis Fig. 3 im Bereich des Schraubteiles und des An- triebsteiles in einer Endlage des Schraubteiles auf einem Gewindebolzen.

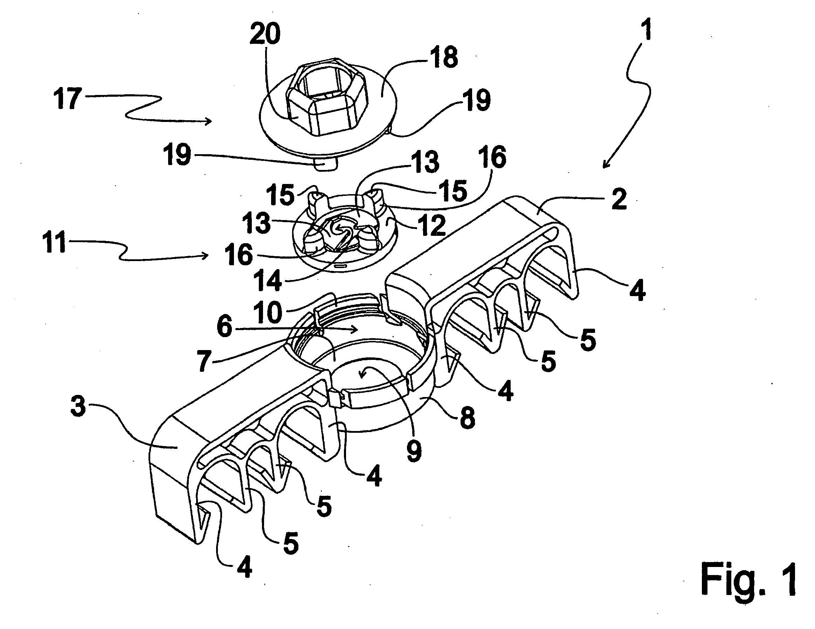

Fig. 1 zeigt in einer perspektivischen Explosionsdarstellung ein Ausführungsbeispiel der Erfindung, das in einen Kabelhalter 1 integriert ist. Der Kabelhalter 1 verfügt in an sich bekannter Weise über einen ersten Halterarm 2 und einen zweiten Halterarm 3, die jeweils mit Randwangen 4 und zwischen den Randwangen 4 angeordneten Zwischenwangen 5 zur Aufnahme von Kabeln ausgebildet sind.

Bei dem dargestellten Ausführungsbeispiel der Erfindung ist ein im wesentlichen hohlzylinderförmig ausgebildeter Ringkäfig 6 vorhanden, der zwischen den Halterarmen 2, 3 angeordnet und mit diesen verbunden ist. An einer axialen Endseite des Ringkäfigs 6 ist ein Bodenring 7 als Widerlagerbereich angesetzt, der sich von einer Wand 8 des Ringkäfigs 6 in radialer Richtung nach innen erstreckt, wobei ein Durchführbereich 9 frei bleibt. An der dem Bodenring 7 gegenüberliegenden axialen Endseite des Ringkäfigs 6 ist eine durch radial nach innen weisende Nasen ausgebildete Raststruktur 10 vorhanden.

Weiterhin verfügt das dargestellte Ausführungsbeispiel über ein Schraubteil 11, das einen Außenring 12 aufweist. Der Außendurchmesser des Außenringes 12 ist kleiner als der Innendurchmesser des Ringkäfigs 6, so dass das Schraubteil 11 in dem Ringkäfig 6 in radialer Richtung Spiel hat. Von dem Außenring 12 erstrecken sich von dessen radialer Innenseite zwei sich gegenüberliegende Innenlaschen 13. Die Innenlaschen 13 verfügen an ihren aufeinander zu weisenden Stirnseiten über eine kreisbogenförmig berandete Ausnehmung 14 und sind bei einer gewissen Biegsamkeit in axialer Richtung in axialer Richtung angestellt. An dem Außenring 12 sind weiterhin eine Anzahl von Mitnehmervorsprünge 15 einer ersten Eingriffsstruktur angesetzt, die sich in Anstellrichtung der innenlaschen 13 von dem Außenring 12 wegweisend erstrecken. Bei dem dargestellten Ausführungsbeispiel sind die Mitnehmervorsprünge 15 mit nach außen gewölbten und abgerundeten Außenwänden 16 ausgebildet.

Schließlich weist das dargestellte Ausführungsbeispiel ein Antriebsteil 17 auf, das mit einem außenseitig kreisförmigen Deckring 18 ausgebildet ist. Der Außendurchmesser des Deckringes 18 entspricht im wesentlichen dem Innendurchmesser des Ringkäfigs 6. An den Deckring 18 sind eine Anzahl von in einer axialen Richtung über den Deckring 18 vorstehenden Antriebsvorsprüngen 19 einer zweiten Eingriffsstruktur und ein in der anderen axialen Richtung über den Deckring 18 vorstehender Formabschnitt 20 als Werkzeugansatzstruktur angesetzt. Der Formabschnitt 20 ist zum Eingriff mit einem Handhabungswerkzeug eingerichtet, mit dem das Antriebsteil 17 drehbar ist.

Im zusammengefügten Zustand des Ausführungsbeispiels liegt die den Mitnehmervorsprüngen 15 gegenüberliegende Seite des Außenringes 12 an dem Bodenring 7 an und ist lose in dem Ringkäfig 6 angeordnet, während der Deckring 18 mit der Raststruktur 10 in Eingriff ist und damit sowohl in axialer als auch in radialer Richtung fixiert ist.

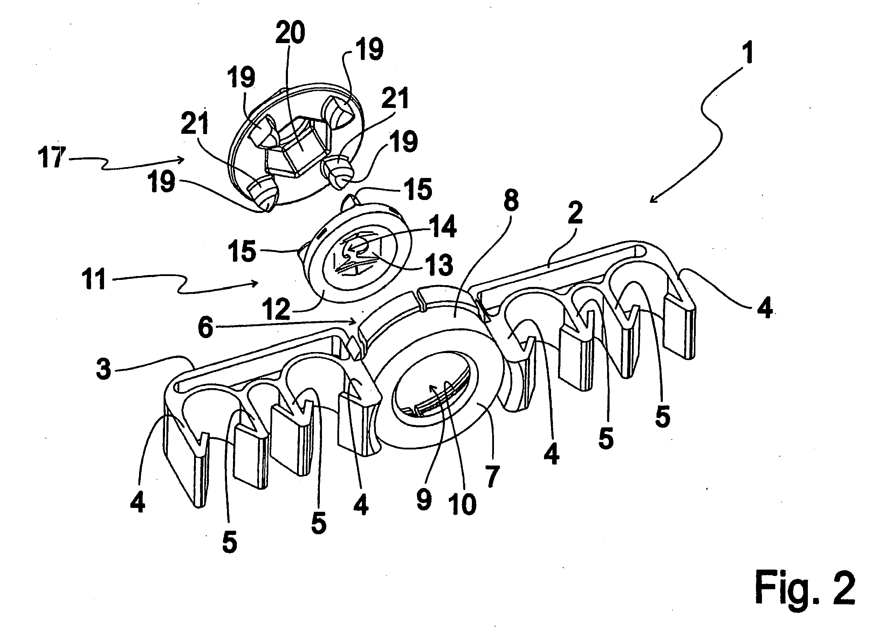

Fig. 2 zeigt in einer weiteren perspektivischen Explosionsdarstellung das Ausführungsbeispiel gemäß Fig. 1 in einer Ansicht aus einer der Ansicht gemäß Fig. 1 entgegengesetzten Richtung. Aus Fig. 2 ist besonders gut ersichtlich, dass durch die Anstellung der Innenlaschen 13 in einer von dem Bodenring 7 wegweisenden Richtung ein Zentriertrichter für einen in Fig. 2 nicht dargestellten Gewindebolzen geschaffen ist. Weiterhin ist Fig. 2 zu entnehmen, dass auch die Außenwände 21 der Antriebsvorsprünge 19 nach außen gewölbt und abgerundet sind.

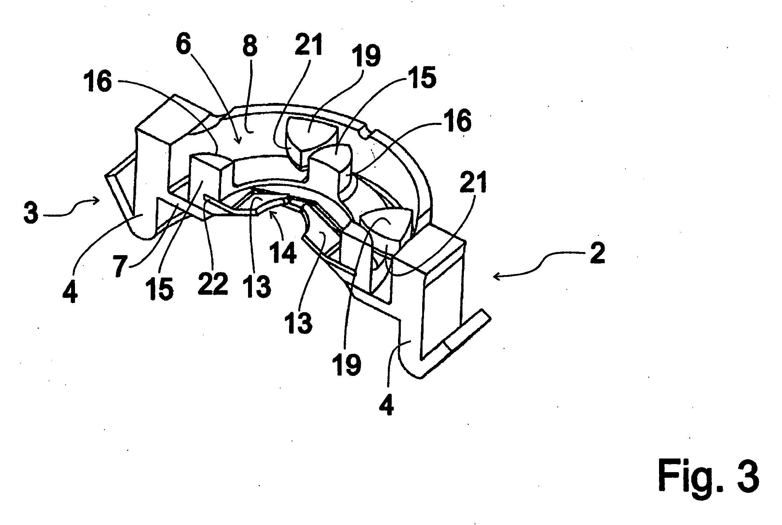

Fig. 3 zeigt in einer gegenüber dem Maßstab von Fig. 1 und Fig. 2 vergrößerten teilgeschnittenen perspektivischen Darstellung das Ausführungsbeispiel gemäß Fig. 1 und Fig. 2 im Bereich des Schraubteiles 11 und des Antriebsteiles 17 in einem Schnitt in radialer Richtung in etwa im Mittenbereich des Ringkäfigs 6.

Aus Fig. 3 ist ersichtlich, dass die abgerundeten Außenwände 16, 21 der Mitnehmervorsprünge 15 beziehungsweise der Antriebsvorsprünge 19 auch bei dem radialen Spiel des Außenringes 12 in dem Ringkäfig 6 zu einem in den verschiedenen Stellungen des Schraubteiles 11 in Bezug auf das Antriebsteil 17 gleich gearteten Kontakt zwischen den Eingriffsstrukturen und damit zu einem gleichartigen Schraubverhalten führen.

Weiterhin kann Fig. 3 entnommen werden, dass die Innenlaschen 13 an einen Aufnehmerring 22 angeformt sind, der von dem Außenring 12 umgeben ist. Vorzugsweise sind die Innenlaschen 13 und der Aufnehmerring 22 aus einem sehr biegesteifen und gegen Abrasion widerstandsfähigen Metall hergestellt, wobei der Aufnehmerring 22 von einem die übrigen Teile des Schraubteiles 11 bildenden Kunststoffmaterial umspritzt ist.

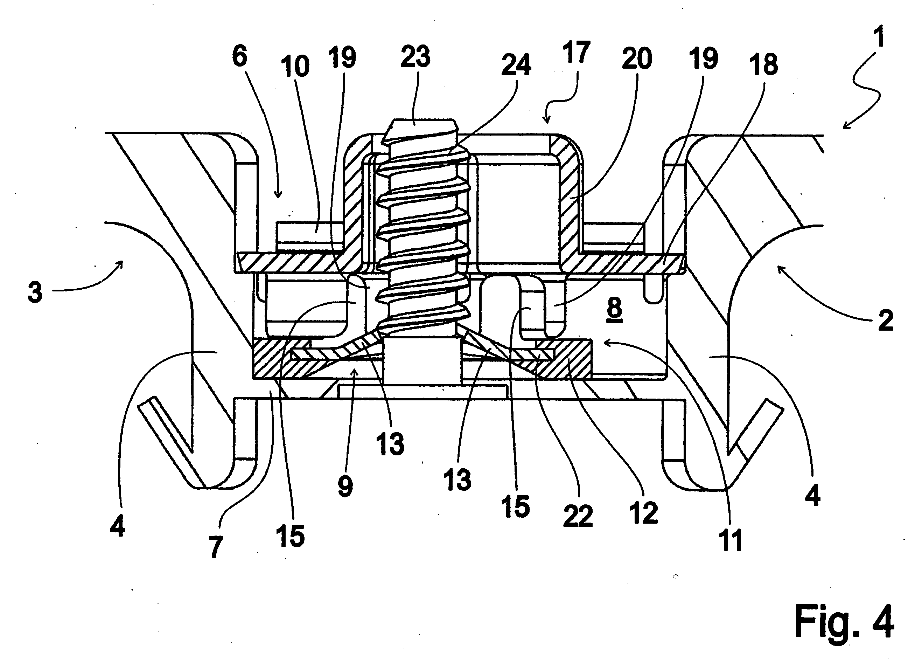

Fig. 4 zeigt in einer Schnittansicht das Ausführungsbeispiel gemäß Fig. 1 bis Fig. 3 im Bereich des Schraubteiles 11 und des Antriebsteiles 17 in einer Endlage des Schraubteiles 11 auf einem mit einem in Fig. 4 nicht dargestellten Trägerteil verbundenen Gewindebolzen 23, der ein Außengewinde 24 aufweist. Fig. 4 ist zu entnehmen, dass die Stirnseiten der Mitnehmervorsprünge 15 an dem Deckring 18 und die Stirnseiten der Antriebsvorsprünge 19 an dem Außenring 12 anliegen, so dass auch das Schraubteil 11 in axialer Richtung im wesentlichen spielfrei in dem Ringkäfig 6 gelagert ist.

Aus Fig. 4 ist ersichtlich, dass auf Grund des radialen Spieles des Schraubteiles 11 in Bezug auf den Ringkäfig 6 und des Eingriffes der die Eingriffsstrukturen bildenden Mitnehmervorsprünge 15 und Antriebsvorsprünge 19 auch bei einer in radialer Richtung versetzten Anordnung der Längsachsen des Schraubteiles 11 und des Antriebsteiles 17 bei Drehen des Antriebsteiles 17 die Innenlaschen 13 an dem Außengewinde 24 entlanggleiten und damit den Kabelhalter 1 mit dem Trägerteil fest verbinden.

Weiterhin ist Fig. 4 zu entnehmen, dass sich auf Grund der trichterförmigen Anstellung der Innenlaschen 13 in Einführrichtung des Gewindebolzens 23 das Schraubteil 11 selbsttätig ausrichtet, so dass ausgehend von einer Vormontageposition in einem ersten Montageschritt der Kabelhalter 1 unter Überfahren der Gewindegänge durch die in Einführrichtung biegsamen Innenlaschen 13 auf den Gewindebolzen 23 in eine Zwischenmontageposition aufsteckbar ist, bevor in einem zweiten Montageschritt die Befestigung in Endmontageposition durch Drehen des Antriebsteiles 17 erfolgt. Die korrekte Beendigung des zweiten Montageschrittes ist dabei durch das Erreichen eines entgegen der Eindrehrichtung auf die Innenlaschen 13 wirkenden und diese unter eine gewisse Vorspannung setzenden bestimmten erhöhten Anzugsmomentes überprüfbar, wobei durch die abgerundete Ausgestaltung der Außenwände 16, 21 sichergestellt ist, dass kein fälschlicherweise eine korrekte Beendigung des zweiten Montageschrittes anzeigendes erhöhtes Anzugsmoment auftritt, bevor die Endlage erreicht ist.

## Patentansprüche

1. Vorrichtung zum Befestigen an einem mit einem Gewindebolzen (23) versehenen Trägerteil mit einem auf einen Gewindeabschnitt des Gewindebolzens (23) aufschraubbaren Schraubteil (11) und mit einem Widerlagerbereich, an dem das Schraubteil in einer Endlage anliegt, wobei das Schraubteil (11) eine erste Eingriffsstruktur (15) aufweist, wobei ein drehbares Teil (17) vorhanden ist, das über eine zweite Eingriffsstruktur (19) verfügt, die mit der ersten Eingriffsstruktur (15) in Eingriff ist, und wobei das Schraubteil (11) sowie das Teil (17) wenigstens vor Einnahme der Endlage in radialer Richtung zueinander bewegbar sind, **dadurch gekennzeichnet, dass** das Teil als mit dem Schraubteil (11) drehfest in Eingriff stehendes Antriebsteil (17) mit einer Werkzeugansatzstruktur (20) ausgebildet ist, die mit einem Handhabungswerkzeug in Eingriff bringbar ist.

2. Vorrichtung nach Anspruch 1, **dadurch gekennzeichnet, dass** ein den Widerlagerbereich (7) aufweisender Ringkäfig (6) vorhanden ist, in dem das Schraubteil (11) und/oder das Antriebsteil (17) gehalten sind beziehungsweise ist.

3. Vorrichtung nach Anspruch 2, **dadurch gekennzeichnet, dass** das Antriebsteil (17) in axialer und radialer Richtung gehalten ist.

4. Vorrichtung nach einem der Ansprüche 1 bis 3, **dadurch gekennzeichnet, dass** die Eingriffsstrukturen sich in axialer Richtung erstreckende Vorsprünge (15, 19) aufweisen.

5. Vorrichtung nach Anspruch 4, **dadurch gekennzeichnet, dass** aufeinander zu weisende Außenwände (16, 21) der Vorsprünge (15, 19) nach außen gewölbt und abgerundet sind.

6. Vorrichtung nach einem der Ansprüche 1 bis 5, **dadurch gekennzeichnet, dass** das Schraubteil (11) wenigstens zwei in radialer Richtung von einem Außenring (12) aufeinander zu laufende Innenlaschen (13) aufweist, deren freien Enden mit dem Gewindeabschnitt in Eingriff bringbar sind.

7. Vorrichtung nach Anspruch 6, **dadurch gekennzeichnet, dass** die Innenlaschen (13) in einer Einführrichtung des Gewindebolzens (23) trichterförmig angestellt sind.

## Claims

1. Device for fastening to a support member which is provided with a threaded bolt (23), comprising a screw member (11) which can be screwed onto a threaded section of the threaded bolt (23), and an abutment region against which the screw member lies in an end position, wherein the screw member (11) comprises a first engagement structure (15) wherein a rotatable member (17) is present which has a second engagement structure (19) which is in engagement with the first engagement structure (15), and wherein the screw member (11) and the member (17) are movable towards one another in the radial direction at least before assuming the end position, **characterised in that** the member is configured as a drive member (17) which is in rotationally fixed engagement with the screw member (11) and which has a tool attachment structure (20) which can be brought into engagement with a hand-operated tool.

2. Device according to claim 1, **characterised in that** a ring cage (6) which comprises the abutment region (7) is provided, in which the screw member (11) and/or the drive member (17) is or are held.

3. Device according to claim 2, **characterised in that** the drive member (17) is held in the axial and the radial direction.

4. Device according to one of the claims 1 to 3, **characterised in that** the engagement structures have projections (15, 19) extending in the axial direction.

5. Device according to claim 4, **characterised in that** mutually facing outer walls (16, 21) of the projections (15, 19) are bowed outwardly and rounded.

6. Device according to one of the claims 1 to 5, **characterised in that** the screw member (11) has at least two internal tongues (13) extending from an outer ring (12) towards one another in the radial direction, the free ends of said tongues being able to be brought into engagement with the threaded section.

7. Device according to claim 6, **characterised in that** the internal tongues (13) are arranged in a funnel shape in the introducing direction of the threaded bolt (23).

## Revendications

1. Dispositif de fixation sur un élément faisant office de support muni d'un goujon fileté (23), comprenant un élément de vissage (11) destiné à se visser sur la portion filetée du goujon fileté (23) et une portion formant butée contre laquelle l'élément de vissage est en contact d'application dans sa position extrême, dans lequel l'élément de vissage (11) comporte une première structure de mise en prise d'engagement (15), dans lequel il est prévu un élément auquel il est possible d'imprimer un mouvement de rotation (17), qui est muni d'une deuxième structure de mise en prise d'engagement (19) qui est en prise d'encastrement avec la première structure de mise en prise d'engagement (15) et dans lequel l'élément de vissage (11) ainsi que l'élément (17) peuvent être mus l'un par rapport à l'autre dans le plan radial au moins avant de venir se placer dans leur position finale, **caractérisé en ce que** l'ensemble constitué par l'élément d'actionnement (17) en prise d'engagement immobilisé en rotation avec l'élément de vissage (11) est muni d'une structure d'insertion d'outil (20) qui peut être emmanchée en prie d'engagement avec un outil de manipulation.

2. Dispositif selon la revendication 1, **caractérisé en ce qu'**il est prévu une structure annulaire formant cage (6) définissant la portée de butée (7), dans laquelle l'élément de vissage (11) et, ou encore, l'élément d'actionnement (17) est ou sont maintenu(s).

3. Dispositif selon la revendication 2, **caractérisé en ce que** l'élément d'actionnement (17) est maintenu dans le plan radial et le plan axial.

4. Dispositif selon l'une des revendications 1 à 3, **caractérisé en ce que** les structures de mise en prise d'engagement comportent des protubérances (15, 19) qui s'étendent dans le sens axial.

5. Dispositif selon la revendication 4, **caractérisé en ce que** les parois extérieures (16, 21), respectivement orientées l'une vers l'autre, des protubérances (15, 19) sont bombées et arrondies vers l'extérieur.

6. Dispositif selon l'une des revendications 1 à 5, **caractérisé en ce que** l'élément de vissage (11) comporte au moins deux languettes intérieures (13) s'étendant l'une vers l'autre dans le plan radial depuis une bague extérieure (12), dont les extrémités libres sont destinées à venir s'insérer en prise d'engagement avec la portion filetée.

7. Dispositif selon la revendication 5, **caractérisé en ce que** les languettes intérieures (13) sont disposées de manière à définir une configuration en forme d'entonnoir dans le sens de l'introduction du goujon fileté (23).
